# EUROPÄISCHE PATENTSCHRIFT

(11) **EP 1 194 620 B1**
(45) Veröffentlichungstag und Bekanntmachung des Hinweises auf die Patenterteilung: **17.09.2003**
(21) Anmeldenummer: 00945835.7
(22) Anmeldetag: 28.06.2000
(51) Int. Cl.: D01D 11/06, A46D 1/00

(54) **VERFAHREN ZUR HERSTELLUNG VON BORSTEN**
METHOD FOR THE PRODUCTION OF BRISTLES
PROCEDE POUR LA FABRICATION DE POILS

(30) Priorität: 09.07.1999 DE 19931993
(43) Veröffentlichungstag der Anmeldung: 10.04.2002
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Lichti, Heiner, Dipl.-Ing.
(86) Internationale Anmeldenummer: EP0005985
(87) Internationale Veröffentlichungsnummer: WO01004392

(56) Entgegenhaltungen:
- WO-A-94/10539
- WO-A-94/13870
- WO-A-96/30567
- WO-A-98/34514
- DE-A- 3 114 324
- US-A- 3 689 118
- US-A- 4 297 413

## Beschreibung

Die Erfindung betrifft ein Verfahren zur Herstellung von Borsten im Wege des Extrudierens und Verstreckens, wobei die Borsten aus einem wenigstens einadrigen Kern und einem Mantel aus thermoplastischem Kunststoff bestehen und die Werkstoffe von Kern und Mantel unterschiedliche technischphysikalische Eigenschaften aufweisen.

Kunststoffborsten werden üblicherweise durch Extrudieren bzw. Spinnen in Form von Endlosmonofilen hergestellt und durch Ablängen der Monofile bzw. von zu Strängen züsammengeführten Monofilen erhalten. Ferner sind Kunststoffborsten bekannt, die aus einem Kern und einem Mantel bestehen, um unterschiedliche Werkstoffeigenschaften oder bei transparentem Mantel unterschiedliche optische Eigenschaften, beispielsweise für eine Verbrauchsanzeige zu nutzen (DE 34 00 941 A1, US 3 258 805 A1, EP 0 303 202).

Soweit Mantel und Kern aus thermoplastischen Kunststoffen bestehen, können sie durch Koextrusion der beiden KunstStoffe erzeugt werden (GB 2 050 156, WO 94/10 539). Das so erhaltene Endlosmaterial muß unmittelbar beim Extrudieren im noch weichplastischen Zustand verstreckt und nach einem ausreichenden Abkühlen erneut verstreckt werden, um dem Material durch Molekularorientierung die notwendige Biegesteifigkeit bei gleichwohl ausreichender Elastizität zu verleihen. Da die beiden Kunststoffe, wie gewünscht, unterschiedliche Eigenschaften aufweisen, ist auch ihr verhalten beim Verstrecken unterschiedlich, so daß Kompromisse hinsichtlich der Materialeigenschaften des Endproduktes geschlossen werden müssen.

Bei einem anderen bekannten Verfahren (WO 96/30567 A1), insbesondere zur Herstellung von Angelschnüren, wird auf einen multifilen Kern ein Mantel aus einem thermoplastischen Polymer aufextrudiert. Vorzugsweise ist das Multifilament verdrillt und wird beim Aufextrudieren des Mantels gestreckt. Anschließend wird das Kernmaterial nachverstreckt und zugleich gekühlt, um eine ausgeprägte Molekularorientierung im Kernmaterial zu erhalten. Dabei wird - wenn auch nicht beschrieben - das Mantelmaterial vermutlich auch verstreckt. Mantel und Kern sollen aus thermoplastischen Polymeren unterschiedlicher Schmelztemperatur bestehen. Im Vordergrund steht die Erzeugung eines hochzugfesten und abriebfesten Verbundmaterials, wobei die Zugfestigkeit vornehmlich durch das Kernmaterial, die Abriebfestigkeit durch das Mantelmaterial geliefert werden soll.

Weiterhin ist es bekannt, (US 4,297,413 A), ein Kernmonofil mit mittlerer Molekularorientierung mit einem Mantel durch Aufextrudieren zu beschichten, der aus einem nichtorientierten Polymer besteht. Das Verbundmaterial wird anschließend nachverstreckt, so daß die Molekularorientierung im Kern optimiert und zugleich das Mantelmaterial in einen orientierten zustand übergeführt wird. Auch hierbei geht es vornehmlich um die Herstellung von Angelschnüren.

Es ist weiterhin bekannt (GB 2 050 156 A), beim Extrudieren von Borsten den Kunststoff für den Kern diskontinuierlich und den für den Mantel kontinuierlich zuzuführen, so daß ein Endlosmaterial entsteht, in welchem voneinander getrennte Kernabschnitte eingebettet sind. Zwischen den Kernabschnitten ist der Mantel jeweils eingeschnürt. Im Bereich der Einschnürung soll dann das Endlosmaterial aufgetrennt werden, um einzelne Borsten mit je einem Kern zu erhalten, der in seinen beiden Enden von dem Material des Mantels abgedeckt ist. Dieses Verfahren könnte für die Borstenherstellung sinnvoll sein, scheitert aber an der Durchführbarkeit. Das nach dem Extrudieren zwingend notwendige Verstrecken um das 1,5 bis 10-fache in jeder der beiden Verstreckungsstufen, führt zwangsläufig zum frühzeitigen Reissen des Mantelmaterials an den Einschnürungen. Da die Zugkräfte nicht auf das Kernmaterial übertragen werden können, erfährt dieses zwangsläufig keine molekulare Orientierung und ist folglich für Borsten völlig ungeeignet.

Der Erfindung liegt die Aufgabe zugrunde, ein Verfahren zur Herstellung von Borstenmaterial vorzuschlagen; bei dem der Mantel die an eine Borste zu stellenden physikalischtechnischen Eigenschaften bietet, während der Kern jedes beliebige Eigenschaftsprofil aufweisen soll, wobei insbesondere die Gebrauchseigenschaften oder Einsatzzwecke der fertigen Borste visualisiert werden sollen.

Diese Aufgabe wird erfindungsgemãB dadurch gelöst, daß der Kern als vorgefertigtes, farbiges Endlosmaterial mit einer Längungsreserve zugeführt und auf den laufenden Kern der Mantel aus einem thermoplastischen, transparenten Kunststoff aufextrudiert, und daß beim anschließenden Verstrekken des Mantels zumindest ein Teil der Längsungsreserve des Kerns aufgebraucht wird.

Durch die Vorfertigung des Endlosmaterials für den Kern und dessen Zuführung zum anschließenden Aufextrudieren des Kunststoffs für den Mantel, können dem Kern annähernd beliebige Eigenschaften durch entsprechende Materialauswahl oder durch Art und Aufbau des Endlosmaterials verliehen werden. Beim Warmverstrecken unmittelbar nach dem Extrudieren, wie auch beim anschließenden Kalt- oder Warmverstrekken des Mantels, werden dem Mantel die für Borsten notwendigen Eigenschaften hinsichtlich Biegefähigkeit und Wiederaufrichtvermögen verliehen, während das Endlosmaterial des Kerns durch Aufbrauch der Längsungsreserve dem Verstrekkungsvorgang folgen kann und gegebenenfalls erst dabei seiner endgültigen und gewünschten Eigenschaften erhält. Im Gegensatz zum Koextrudieren, bei dem beide Materialien im Schmelzezustand verarbeitet werden müssen, können bei dem erfindungsgemäßen Verfahren für den Kern auch Werkstoffe eingesetzt werden, die im Schmelzezustand gar nicht oder zumindest nicht in verbindung mit dem Mantelmaterial verarbeitbar sind. Dabei, kann es sich auch um Werkstoffe handeln, die selbst temperaturempfindlich sind oder temperaturempfindliche Additive enthalten, weil der Kontakt mit der Polymerschmelze des Mantels nur kurzzeitig ist und der Mantel aufgrund des gegenüber einem Monofil geringeren Querschnittes schneller abkühlt. Durch die transparente Ausbildung des Mantels und die Farbigkeit des Kerns lassen sich bestimmte Gebrauchseigenschaften oder Einsatzzwecke der Borste an der fertigen Borstenware visualisieren. Ferner kann dieses Verfahren für eine Verbrauchsanzeige an der Borste genutzt werden, in dem das Kernmaterial bei zunehmender Abnutzung freigelegt und die Farbe des Kerns in Erscheinung tritt oder intensiver wird.

Die Längsreserve des Endlosmaterials für den Kern kann auf verschiedene Weise verwirklicht werden, beispielsweise kann der Kern in Form eines Endlosmaterials mit hohem Dehnungsvermögen zugeführt werden. Hierfür kommen insbesondere Werkstoffe mit gummiartigen Eigenschaften in Frage, die nach dem Verstrecken und Erkalten in der Borste eine Art Vorspannung erzeugen. Dadurch erhält die Borste mit ihrem gegenüber dem Kern vergleichsweise steifen Material besonders gute Biegeeigenschaften.

Stattdessen ist es möglich, das Endlosmaterial des Kerns in Form wenigstens eines nicht-linearen Monofils zuzuführen, wobei die Längungsreserve durch Strecken des Monofils in eine annähernd lineare Form teilweise oder völlig aufgebraucht wird.

Ferner ist es möglich, das Endlosmaterial des Kerns in gewellter, gestauchter oder gewendelter Form zuzuführen und die Längsungsreserve aus der Wellung, Stauchung oder Wendelung zu beziehen. Wird die Längungsreserve nur teilweise aufgebraucht, bildet sich die verbleibende Wellung, Stauchung oder Wendelung am Mantel ab, sofern dieser in engem Kontakt mit dem Endlosmaterial des Kerns aufextrudiert wird. Dies führt zu Borsten mit profilierter Oberfläche, die eine stärkere Reinigungswirkung haben.

Ferner kann das Endlosmaterial des Kerns in geflochtener, gewirkter oder gestreckter Form zugeführt werden, wobei sich beim Verstrecken des Mantels das Endlosmaterial des Kerns entsprechend streckt. Schließlich kann der Kern in Form wenigstens eines nicht oder nur teilverstreckten Kunststoffmonofils zugeführt werden, das also beim Verstrecken des Mantels eine ausreichende Längungsreserve besitzt, um mitverstreckt zu werden.

Beim Verstrecken des Mantels kann die gesamte Längungsreserve aufgebraucht werden, wozu das Endlosmaterial hinsichtlich seines Aufbaus bzw. der Werkstoffwahl auf den Kunststoff des Mantels und die notwendige Verstreckung entsprechend abgestimmt werden muß.

Es kann der Kern auch als Endlosmaterial mit Querschnittsschwäcnungen zugeführt werden, wobei diese Querschnittsschwächungen vorzugsweise äquidistant angeordnet werden. Beim Verstrecken des Mantels kann nach Aufbrauch der Längungsreserve das Endlosmaterial des Kerns bis zum Mehrfachbruch überdehnt werden, so daB in dem fertigen Borstenmaterial der Kern in unterbrochenen Abschnitten vorliegt, ohne daß -wie beim eingangs geschilderten Stand der Technik- der Mantel beim Verstrecken reißt. Werden die Querschnitts-Schwächungen am Endlosmaterial des Kerns äquidistant vorgesehen, können die Abstände insbesondere auf die Borstenlänge abgestimmt werden, so daß jede Borste wenigstens einen Kernabschnitt aufweist und das Kernmaterial an beiden Enden durch Mantelmaterial abgedeckt ist.

Die Erfindung gibt ferner die Möglichkeit, das Endlosmaterial des Kerns vor dem Zuführen mit chemisch, physikalisch, hygienisch oder medizinisch wirksamen Additiven auszurüsten, die dann nach dem Aufextrudieren des Mantels von diesem abgedeckt sind. Der Kunststoff des Mantels kann dabei so ausgewählt werden, daß diese Additive ohne weitere MaBnahmen oder aber durch Feuchtigkeitseinwirkung in den Mantel und aus diesem in die Umgebung diffundieren. Dies empfiehlt sich beispielsweise bei medizinisch oder hygienisch wirksamen Additiven bei Einsatz der Borsten für Zahnbürsten. Zwar sind Borstenmaterialien bekannt, die solche Additive enthalten, jedoch werden sie entweder in das Monofil direkt eingelagert oder oberflächig aufgebracht. Eine direkte Einlagerung scheitert bei vielen Additiven aufgrund ihrer Temperaturempfindlichkeit mit der Folge, daß sie beim Extrudieren geschädigt werden. Diese Gefahr ist bei dem erfindungsgemäßen Verfahren nicht gegeben. Auch kann die Abgabe solcher Additive während des Gebrauchs durch die Auswahl des Mantelmaterials gut gesteuert werden.

Es kann der Kern auch in Form eines Endlosmaterials mit unmittelbarer medizinischer oder hygienischer Wirkung zugeführt werden. Dies gilt insbesondere für metallische Ionenbildner, wie Silber oder Silberverbindungen, deren antibakterielle Wirkung bekannt ist. Ihre Einbettung in Monofilen ist bekannt, führt dann aber zu einer unansehnlich grauen Farbe.

Der Kern kann ferner in Form eines Endlosmaterials aus Metalldraht oder metallisiertem Kunststoff zugeführt werden. Auch hierbei können ionenbildenden Eigenschaften oder aber sonstige Eigenschaften von Metallen genutzt werden.

Schließlich kann der Kern in Form eines Endlosmaterials aus parallelliegenden, verzwirnten oder gedrehten Monofilen zugeführt werden, die zum einen eine gewisse Längungsreserve bieten, zum anderen in der verzwirnten oder gedrehten Form eine hohe Zugfestigkeit besitzen.

Nachstehend ist das Verfahren gemäß der Erfindung anhand der Arbeitsweise von in der Zeichnung wiedergegebenen vorrichtungsbeispielen beschrieben. In der Zeichnung zeigen:
- Fig. 1: eine schematische Ansicht; eines Extruders zur Durchführung des Verfahrens;
- Fig. 2: einen vergrößerten Schnitt im Bereich der Extruderdüse in einer ersten Ausführungsform und
- Fig. 3: einen der Fig. 2 entsprechenden Schnitt einer weiteren Ausführungsform.

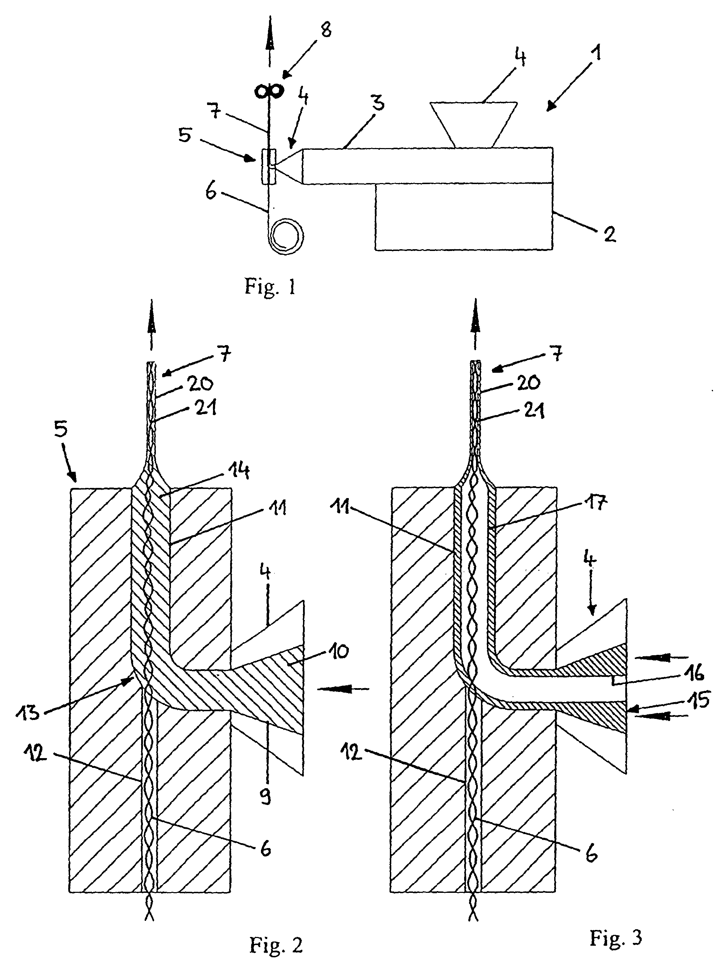

Fig. 1 zeigt einen herkömmlichen Extruder 1 mit einem Unterbau 2, dem eigentlichen Extrudergehäuse 3 und einem Aufgabetrichter 4 für ein Polymer-Granulat für den Mantel des herzustellenden Borstenmaterials. Der Extruderdüse 4 des Extruders 1 ist ein Formkopf 5 unmittelbar nachgeschaltet, in welchem das die Extruderdüse 4 verlassende Extrudat unter einem Winkel -beim gezeigten Ausführungsbeispiel 90°nach oben umgelenkt wird. In den Formkopf 5 wird von unten her Endlosmaterial 6 zur Bildung des Kerns des Borstenmate. rials zugeführt. Das Endlosmaterial kann natürlich auch von oben nach unten geführt werden. Ebenso ist es möglich, das Extrudat senkrecht austreten zu lassen und in die Horizontale umzulenken, so daß der Endlosstrang horizontal geführt werden kann. An dem Formkopf 5 tritt oben ein Verbundstrang 7 aus dem innen liegenden Endlosmaterial 6, das eine Längungsreserve besitzt, und dem aus der Düse 4 austretenden Extrudat besteht.

Zum Abziehen des Verbundstrangs 7 dient eine Einrichtung 8 mit Galetten, die beim Abziehen zugleich das den Mantel bildende Extrudat verstrecken. Der Einrichtung 8, die gegebenenfalls auch aus mehreren hintereinander geschalteten Galetten bestehen kann, kann eine weitere Einrichtung zum Kalt- oder Warmverstrecken nachgeschaltet sein.

Bei dem Extruder gemäß Fig. 2 weist die Extruderdüse 4 einen sich verjüngenden Querschnitt 9 auf, durch den das noch schmelzweiche Extrudat 10 als massives Monofil austritt. Der Formkopf 5 weist einen Formkanal 11 auf, der um 90° nach oben abgebogen ist und in den das Extrudat umgelenkt wird. Der Formkopf 5 weist ferner einen Führungskanal 12 auf, der stromab der Extruderdüse 4 im Formkopf angeordnet ist und im Bereich der Umlenkung 13 in den Formkanal 11 einmündet. Durch den Führungskanal 12 wird das Endlosmaterial 6 zugeführt, dessen Längungsreserve durch die wellenförmige Darstellung angedeutet ist. Es kann sich um eine reine Längenreserve oder auch um eine Dehnungsreserve handeln.

Das Endlosmaterial 6 läuft in der Achse des Formkanals 11 ein und wird dabei vollständig von dem Extrudat umschlossen. Hierfür sorgt die Einrichtung 8, die das am Formkanal 11 austretende Extruder 14 für den Mantel der Borste und zugleich das Endlosmaterial 6 für den Kern der Borste abzieht. Dabei verjüngt sich der Querschnitt des Extrudates 14 unmittelbar nach Austritt aus dem Formkopf 5 auf ein vorgegebenes Maß zu dem Verbundstrang 7 und wird zugleich zumindest ein Teil der Längungsreserve des Endlosmaterials 6 aufgebraucht, wie dies aus der Zeichnung erkennbar ist. In dem Verbundstrang 7 umhüllt der Mantel 20 den Kern 21 stoff- und/oder formschlüssig.

Bei dem Extruder gemäß Fig. 3 ist die Extruderdüse 4 als Ringdüse 15 ausgebildet, deren Innendurchmesser 16 größer ist als die größte Ausdehnung des Endlosmaterials 6 quer zu seiner Längserstreckung. Der Formkanal 11 weist einen Innendurchmesser auf, der etwa dem Außendurchmesser der ringförmigen Extruderdüse 15 entspricht, so daß das den Extruder verlassende, noch schmelzweiche Extrudat in Form eines kapillarartigen Monofils 17 ausgebildet wird. Das über den Führungskanal 12 zugeführte Endlosmaterial 6 wird wiederum axial in den Formkanal 11 eingezogen und läuft in den Kapillarraum des Monofils 17 zur Bildung des Verbundstrangs 7 mit dem Mantel 20 und dem Kern 21 ein. Beim abziehen und Verstrecken des Verbundstrangs 7 legt sich zunächst der Mantel des kapillarartigen Monofils 17 am Endlosmaterial 6 an. Da das Mantelmaterial an dieser Stelle nur noch weichplastisch ist, wird das Endlosmaterial 6 nur außenseitig belegt. Durch entsprechende konstruktive Dimensionierung und Einstellung der Abzugskraft an der Einrichtung 8 wird eine mehr oder weniger satte Auflage des Mantels 20 auf dem Kern 21 erreicht, so daß der Kern entweder im Mantel fixiert oder noch axial verschieblich ist, um beispielsweise an der fertigen Borste den Kern teilweise ausziehen zu können und für die Bürstwirkung der hieraus hergestellten Borstenwaren zu nutzen.

## Patentansprüche

1. Verfahren zur Herstellung von Borsten im Wege des Extrudierens und Verstreckens, wobei die Borsten aus einem wenigstens einadrigen Kern und einem Mantel aus thermoplastischem Kunststoff bestehen und die Werkstoffe von Kern und Mantel unterschiedliche technischphysikalische Eigenschaften aufweisen, **dadurch gekennzeichnet, daß** der Kern als vorgefertigtes farbiges Endlosmaterial mit einer Längungsreserve zugeführt und auf den laufenden Kern der Mantel aus einem thermoplastischen, transparenten Kunststoff aufextrudiert wird, und daß beim anschließenden Verstrecken des Mantels zumindest ein Teil der Längungsreserve des Kerns aufgebraucht wird.

2. Verfahren nach Anspruch 1, **dadurch gekennzeichnet, daß** der Kern in Form eines Endlosmaterials mit hohem Dehnungsvermögen zugeführt wird.

3. Verfahren nach Anspruch 1 oder 2, **dadurch gekennzeichnet, daß** das Endlosmaterial des Kerns in Form wenigstens eines nicht-linearen Monofils zugeführt wird.

4. Verfahren nach einem der Ansprüche 1 bis 3, **dadurch gekennzeichnet, daß** der Kern in Form wenigstens eines nicht oder nur teilverstreckten Kunststoffmonofils zugeführt wird.

5. Verfahren nach einem der Ansprüche 1 bis 3, **dadurch gekennzeichnet, daß** das Endlosmaterial des Kerns in gewellter, gestauchter oder gewendelter Form zugeführt wird.

6. Verfahren nach einem der Ansprüche 1 bis 3, **dadurch gekennzeichnet, daß** das Endlosmaterial des Kerns in geflochtener, gewirkter oder gestrickter Form zugeführt wird.

7. Verfahren nach einem der Ansprüche 1 bis 6, **dadurch gekennzeichnet, daß** beim Verstrecken des Mantels die gesamte Längungsreserve aufgebraucht wird.

8. Verfahren nach einem der Ansprüche 1 bis 7, **dadurch gekennzeichnet, daß** der Kern als Endlosmaterial mit Querschnittsschwâchungen zugeführt wird.

9. Verfahren nach einem der Ansprüche 1 bis 8, **dadurch gekennzeichnet, daß** der Kern als Endlosmaterial mit äquidistanten Querschnittsschwächungen zugeführt wird.

10. Verfahren nach einem der Ansprüche 1 bis 9, **dadurch gekennzeichnet, daß** das Endlosmaterial des Kerns beim verstrecken des Mantels unter Aufbrauch der Längungsreserve bis zum Mehrfachbruch gedehnt wird.

11. Verfahren nach einem der Ansprüche 1 bis 10, **dadurch gekennzeichnet, daß** das Endlosmaterial des Kerns vor dem Zuführen mit chemisch, physikalisch, hygienisch oder medizinisch wirksamen Stoffen ausgerüstet wird.

12. Verfahren nach einem der Ansprüche 1 bis 10, **dadurch gekennzeichnet, daß** der Kern in Form eines Endlosmaterials mit unmittelbar medizinischer oder hygienischer Wirkung zugeführt wird.

13. Verfahren nach einem der Ansprüche 1 bis 12, **dadurch gekennzeichnet, daß** der Kern in Form eines Endlosmaterials aus Metalldraht oder metallisiertem Kunststoff zugeführt wird.

14. Verfahren nach einem der Ansprüche 1 bis 13, **dadurch gekennzeichnet, daß** der Kern in Form eines Endlosmaterials aus parallel liegenden, verzwirnten oder gedrehten Monofilen zugeführt wird.

## Claims

1. Method for producing bristles through extrusion and drawing, wherein the bristles consist of a core having at least one strand and a jacket of thermoplastic material, wherein the materials of the core and the jacket have different technical and physical properties, **characterized in that** the core is supplied as colored, pre-fabricated endless material having a length reserve and the jacket, made from a transparent thermoplastic plastic, is extruded onto the running core, wherein at least part of the length reserve of the core is exhausted during subsequent drawing of the jacket.

2. Method according to claim 1, **characterized in that** the core is supplied in the form of an endless material having a high drawing capacity.

3. Method according to claim 1 or 2, **characterized in that** the endless material of the core is supplied in the form of at least one non-linear monofilament.

4. Method according to any one of the claims 1 through 3, **characterized in that** the core is supplied in the form of at least one plastic monofilament which is not or which is only partially stretched.

5. Method according to any one of the claims 1 through 3, **characterized in that** the endless material of the core is supplied in a wavy, compressed or spiralled form.

6. Method according to any one of the claims 1 through 3, **characterized in that** the endless material of the core is supplied in a plaited, knitted or woven form.

7. Method according to any one of the claims 1 through 6, **characterized in that** the entire length reserve is exhausted during drawing of the jacket.

8. Method according to any one of the claims 1 through 7, **characterized in that** the core is supplied as endless material with cross-sectional weakenings.

9. Method according to any one of the claims 1 through 8, **characterized in that** the core is supplied as endless material with cross-sectional weakenings at equal distances.

10. Method according to any one of the claims 1 through 9, **characterized in that** the endless material of the core is drawn to break several times during drawing of the jacket, thereby exhausting the length reserve.

11. Method according to any one of the claims 1 through 10, **characterized in that** the endless material of the core is provided with chemically, physically, hygienically or medically effective substances before being supplied.

12. Method according to any one of the claims 1 through 10, **characterized in that** the core is supplied in the form of an endless material with direct medical or hygienic effect.

13. Method according to any one of-the claims 1 through 12, **characterized in that** the core is supplied in the form of an endless material of metal wire or metallized plastic material.

14. Method according to any one of the claims 1 through 13, **characterized in that** the core is supplied in the form of an endless material of parallel twisted or turned monofilaments.

## Revendications

1. Procédé de fabrication de poils par extrusion et étirage, dans lequel les poils consistent en un noyau au moins unifilaire et en une enveloppe en matière synthétique thermoplastique et dans lequel les matières du noyau et de l'enveloppe présentent des caractéristiques technico-physiques différentes, **caractérisé en ce que** le noyau est amené sous la forme d'un matériau sans fin coloré préfabriqué avec une réserve d'allongement, **en ce que** l'enveloppe est extrudée à partir d'une matière synthétique thermoplastique transparente sur le noyau et **en ce que** durant l'étirage consécutif de l'enveloppe, on utilise au moins une partie de la réserve d'allongement du noyau.

2. Procédé selon la revendication 1, **caractérisé en ce que** le noyau est amené sous la forme d'un matériau sans fin à capacité d'allongement élevée.

3. Procédé selon la revendication 1 ou 2, **caractérisé en ce que** le matériau sans fin du noyau est amené sous la forme d'au moins un monofil non linéaire.

4. procédé selon l'une quelconque des revendications 1 à 3, **caractérisé en ce que** le noyau est amené sous la forme d'au moins un monofil en matière synthétique non étiré ou seulement partiellellement étiré.

5. Procédé selon l'une quelconque des revendications 1 à 3, **caractérisé en ce que** le matériau sans fin du noyau est amené sous forme ondulée, refoulée ou spiralée.

6. Procédé selon l'une quelconque des revendications 1 à 3, **caractérisé en ce que** le matériau sans fin du noyau est amené sous forme tressée, maillée ou tricotée.

7. Procédé selon l'une quelconque des revendications 1 à 6, **caractérisé en ce que** durant l'étirage de l'enveloppe on utilise la totalité de la réserve d'allongement.

8. Procédé selon l'une quelconque des revendications 1 à 7, **caractérisé en ce que** le noyau est amené sous la forme d'un matériau sans fin à étranglements de section.

9. Procédé selon l'une quelconque des revendications 1 à 8, **caractérisé en ce que** le noyau est amené sous la forme d'un matériau sans fin à étranglements de section équidistants.

10. Procédé selon l'une quelconque des revendications 1 à 9, **caractérisé en ce que** le matériau sans fin du noyau est étiré lors de l'étirage de l'enveloppe en utilisant toute la réserve d'allongement jusqu'à ce qu'il se casse en plusieurs endroits.

11. Procédé selon l'une quelconque des revendications 1 à 10, **caractérisé en ce que** le matériau sans fin du noyau est pourvu avant son acheminement de substances actives d'un point de vue chimique, physique, hygiénique ou médical.

12. Procédé selon l'une quelconque des revendications 1 à 10, **caractérisé en ce que** le noyau est amené sous la forme d'un matériau sans fin à action médicale ou hygiénique directe.

13. Procédé selon l'une quelconque des revendications 1 à 12, **caractérisé en ce que** le noyau est amené sous la forme d'un matériau sans fin en fil métallique ou en matière synthétique métallisée.

14. Procédé selon l'une quelconque des revendications 1 à 13, **caractérisé en ce que** le noyau est amené sous la forme d'un matériau sans fin consistant en des monofils parallèles, retordus ou torsadés.
